# EUROPEAN PATENT APPLICATION

(11) **EP 4 478 282 A1**
(43) Date of publication of application: **18.12.2024**
(21) Application number: 23178840.7
(22) Date of filing: 13.06.2023
(51) Int. Cl.: G06T 7/00, G06T 7/10, B07B 13/18

(54) **MONITORING A CONDITION OF A SCREENING MEDIUM**

(71) Applicant: Schenck Process Australia Pty Limited, Beresfield NSW 2322 (AU)
(72) Inventor: Mammadov, Asad, Beresfield, 2322 (AU); Hitchcock, Louise, Beresfield, 2322 (AU); Rowe, Jacob, Beresfield, 2322 (AU)
(74) Representative: Sandvik

(57) **Abstract**

An apparatus, method and computer program product for: receiving information on a screening medium profile, receiving image information comprising a representation of the screening medium, detecting a representation of a plurality of corners of the screening medium within the image information, detecting a representation of a plurality of apertures associated with the screening medium based on the representation of the plurality of corners, and determining, based on the information on the screening medium profile and the representation of the plurality of apertures, a condition of the screening medium.

## Description

### TECHNICAL FIELD

The present application relates generally to monitoring a screening medium. More specifically, the present application relates to determining a condition of the screening medium.

### BACKGROUND

Screening is a mechanical process that separates particles into a coarse fraction and a fine fraction based on a size of the particles. A screen is a machine with at least one surface used for classifying particles by size.

### SUMMARY

Various aspects of examples are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect, there is provided an apparatus comprising means for performing: receiving information on a screening medium profile, receiving image information comprising a representation of the screening medium, detecting a representation of a plurality of corners of the screening medium within the image information, detecting a representation of a plurality of apertures associated with the screening medium based on the representation of the plurality of corners, and determining, based on the information on the screening medium profile and the representation of the plurality of apertures, a condition of the screening medium.

According to a second aspect, there is provided a method comprising: receiving information on a screening medium profile, receiving image information comprising a representation of the screening medium, detecting a representation of a plurality of corners of the screening medium within the image information, detecting a representation of a plurality of apertures associated with the screening medium based on the representation of the plurality of corners, and determining, based on the information on the screening medium profile and the representation of the plurality of apertures, a condition of the screening medium.

According to a third aspect, there is provided a computer program comprising instructions for causing an apparatus to perform at least the following: receiving information on a screening medium profile, receiving image information comprising a representation of the screening medium, detecting a representation of a plurality of corners of the screening medium within the image information, detecting a representation of a plurality of apertures associated with the screening medium based on the representation of the plurality of corners, and determining, based on the information on the screening medium profile and the representation of the plurality of apertures, a condition of the screening medium.

According to a fourth aspect, there is provided an apparatus comprising at least one processor and at least one memory including computer program code, the at least one memory and the computer program code configured to with the at least one processor, cause the apparatus at least to: receive information on a screening medium profile, receive image information comprising a representation of the screening medium, detect a representation of a plurality of corners of the screening medium within the image information, detect a representation of a plurality of apertures associated with the screening medium based on the representation of the plurality of corners, and determine, based on the information on the screening medium profile and the representation of the plurality of apertures, a condition of the screening medium.

According to a fifth aspect, there is provided a non-transitory computer readable medium comprising program instructions for causing an apparatus to perform at least the following: receiving information on a screening medium profile, receiving image information comprising a representation of the screening medium, detecting a representation of a plurality of corners of the screening medium within the image information, detecting a representation of a plurality of apertures associated with the screening medium based on the representation of the plurality of corners, and determining, based on the information on the screening medium profile and the representation of the plurality of apertures, a condition of the screening medium.

According to a sixth aspect, there is provided a computer readable medium comprising program instructions for causing an apparatus to perform at least the following: receiving information on a screening medium profile, receiving image information comprising a representation of the screening medium, detecting a representation of a plurality of corners of the screening medium within the image information, detecting a representation of a plurality of apertures associated with the screening medium based on the representation of the plurality of corners, and determining, based on the information on the screening medium profile and the representation of the plurality of apertures, a condition of the screening medium.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figures 3A and 3B illustrate an example screening medium profile and an example representation of a screening medium, respectively;
Figure 4 shows an example method incorporating aspects of examples of the invention; and
Figures 5A, 5B and 5C show an example of monitoring a condition of a screening medium incorporating aspects of disclosed embodiments.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to monitoring screening. More specifically, example embodiments relate to monitoring a condition of a screening medium.

Screening is a mechanical process that separates particles into a coarse fraction and a fine fraction based on a size of the particles. A screen comprises a screen box, at least one screening medium such as screen panels and a vibrating mechanism configured to shake and move the material through the screening media. A screening medium comprises, for example, a screening surface comprising a plurality of apertures for classifying the particles by size.

Efficiency of a screening medium is reduced due to, for example, operationally induced damage, tear and clogging of the screening medium, thereby resulting in, for example, a reduced number of particles passing through apertures of the screening medium, particles of a wrong size passing through the apertures, and/or disconnected screening media. Therefore, the screening media needs to be periodically inspected. However, inspecting the screening media may require shutting down and isolating the vibrating machine and the process in order to allow trained personnel to access to the screening media. The inspection may need to be carried out in an unergonomic environment. Further, the inspection may require usage of different kinds of hand tools, thereby being subject to error.

An example embodiment relates to an apparatus configured to receive information on a screening medium profile, receive image information comprising a representation of the screening medium, detect a representation of a plurality of corners of the screening medium within the image information, detect a representation of a plurality of apertures associated with the screening medium based on the representation of the plurality of corners, and determine, based on the information on the screening medium profile and the representation of the plurality of apertures, a condition of the screening medium.

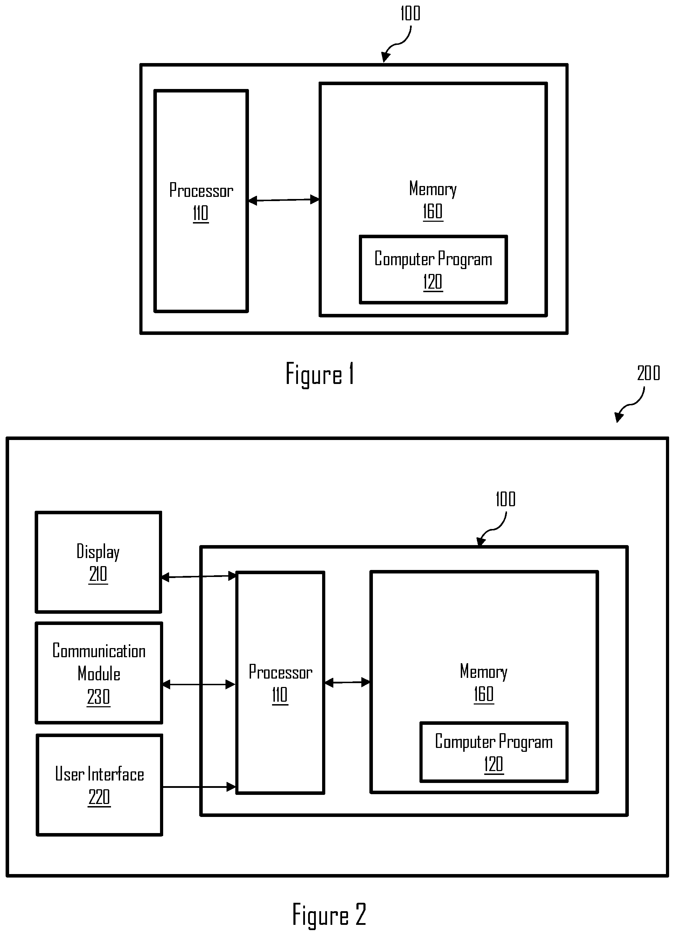

Figure 1 is a block diagram depicting an apparatus 100 operating in accordance with an example embodiment of the invention. The apparatus 100 may be, for example, an electronic device such as a module comprised by an automation or control system, a chip or a chipset. The apparatus 100 comprises one or more control circuitry, such as at least one processor 110 and at least one memory 160, including one or more algorithms such as computer program instructions 120 wherein the at least one memory 160 and the computer program instructions are configured, with the at least one processor 110 to cause the apparatus to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The at least one memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a module comprised by an automation system or a control system, a Personal Computer (PC), a laptop, a desktop, a wireless terminal, a communication terminal, a control apparatus, a computing device or the like. The apparatus may be comprised by a mobile scanning device such as a remotely controllable vehicle configured to traverse screening media. In the examples below it is assumed that the apparatus 200 is a computing device.

In the example embodiment of Figure 2, the apparatus 200 is illustrated as comprising the apparatus 100, a display 210, a communication module 230, and a user interface 220 for interacting with the computing device 200.

The display 210 may also be configured to act as a user interface. For example, the display may be a touch screen display. Additionally, or alternatively, the user interface may also comprise a manually operable control such as a button, a key, a touch pad, a joystick, a stylus, a pen, a roller, a rocker, a keypad, a keyboard or any suitable input mechanism for inputting and/or accessing information.

The apparatus 200 may be configured to, using the communication module 230, establish radio communication with another device using, for example, a cellular network, a Bluetooth connection or Wi-Fi connection, or the like. The apparatus 200 may be configured to communicate with one or more devices using a web-based solution, using an application program provided for a particular operating system such as Android, iOS, Windows, or the like.

The communication module 230 may comprise a module enabling wireless or wired communication with one or more devices. For example, the apparatus 200 may be configured to communicate with a cloud server, a local server, an edge computing server, a mobile computing device, and/or different kinds of devices or machinery. The communication module 230 may be configured to, for example, receive and/or transmit information using a wireless or wired connection. For example, the communication module 230 may be configured to receive radio signals from a device and/or transmit radio signals to the device.

According to an example embodiment, the apparatus 200 is configured to communicate with at least one camera. The apparatus 200 may be configured to communicate with the at least one camera via, for example, the communication module 230. The at least one camera may comprise, for example, a video camera, a stereo camera, or a monocular camera.

Communicating with the at least one camera may comprise, for example, receiving image information captured or streamed by the at least one camera. As another example, communicating with the at least one camera may comprise, for example, instructing a camera to capture or stream image information. Image information may comprise image data such as one or more data frames comprising a visual representation of, for example, one or more objects.

In an example embodiment, the display 210, the user interface 220 and/or the communication module 230 may be external to and separate from the apparatus 200, but operatively connected to the apparatus 200.

According to an example embodiment, the apparatus 200 is configured to monitor a condition of at least one screening medium. A screening medium may comprise, for example, a screen panel comprising apertures for passing material of a defined size through the screen panel.

A condition of a screening medium may comprise a physical state of the screening medium affecting operational efficiency of screening equipment and/or an estimate of remaining service life. A condition of a screening medium may be indicative of, for example, operationally induced wear, damage, tear and/or clogging.

According to an example embodiment, the apparatus 200 is configured to receive information on at least one screening medium.

Information on a screening medium may comprise, for example, information on operation of the screening medium, information on capabilities of the screening medium, and/or information on a state of the screening medium.

The apparatus 200 may be configured to receive the information on a screening medium from one or more sensors associated with the screening medium and/or from one or more devices associated with the screening medium such as one or more devices controlling or monitoring operation of the screening medium.

The apparatus 200 may be configured to receive information continuously or discontinuously. Receiving information continuously may comprise, for example, receiving a flow of information such as substantially real-time measurement data. Receiving information discontinuously may comprise, for example, receiving information at set intervals or in response to a performed action.

According to an example embodiment, the apparatus 200 is configured to receive information on a screening medium profile.

A screening medium profile may comprise, for example, characteristics of a screening medium. Characteristics of a screening medium may relate to a physical appearance of the screening medium. For example, characteristics of a screening medium such as a screen panel may comprise, for example, a size of the screening medium, a shape of the screening medium, a size of at least one aperture of the screening medium, cross-sectional size of at least one aperture, dimensions of at least one aperture, locations of apertures of the screening medium and/or a number of apertures on the screening medium.

A screening medium profile may comprise a model of the screening medium such as characteristics of a screening medium as manufactured. The model of the screening medium may comprise, for example, a digital model comprising a representation of the physical screening medium or a set of parameters corresponding to the physical screening medium.

Information on a screening medium profile may comprise, for example, information on the contents of a screening medium profile or identification information for identifying a screening medium.

According to an example embodiment, the apparatus 200 is configured to receive image information comprising a representation of the screening medium.

Image information comprising a representation of the screening medium may comprise a representation of a screening medium such as a screen panel installed in a vibrating screen.

The image information may comprise, for example, a video feed from a camera. A video feed comprises a sequence of images processed electronically into a predefined format. As another example, the image information may comprise one or more images captured by the camera.

According to an example embodiment, the image information comprises image data such as one or more data frames.

The apparatus 200 may be configured to process the image information using, for example, artificial intelligence (AI). Artificial intelligence may comprise different kinds of mechanisms for analyzing the image information such as one or more computer vision algorithms. A computer vision algorithm is configured to interpret and understand images and/or video by translating visual data based on features and/or contextual information identified during training. A computer vision algorithm may be configured, for example, to extract information from image information to obtain desired data and make decisions based on the obtained data.

A computer vision algorithm may comprise, for example, a neural network. A neural network comprises a plurality of algorithms that are configured to recognize underlying relationships and/or patterns in a set of data. A neural network comprises a plurality of node layers such as an input layer, one or more hidden layers, and an output layer. Each node has an associated weight and a threshold value, and each node connects to nodes in the next layer. If an output of an individual node is above the threshold value, the node is activated, and it sends data to the next layer of the network.

The neural network may comprise, for example, a model for processing data having a grid-like topology such as a digital image comprising a matrix of pixels. For example, the neural network may comprise a convolutional neural network (CNN).

A CNN may comprise a plurality of layers such as an input layer, one or more hidden layers and an output layer. Hidden layers of a CNN may comprise one or more convolutional layers and optionally one or more pooling and/or fully connected layers. An output layer of a CNN is a fully connected layer. With each layer, the CNN increases in its complexity, thereby identifying greater portions of the digital image. For example, a first convolutional layer may be configured to detect edges within the digital image, a second convolutional layer may be configured to detect more complex shapes of an object within the digital image and a third convolutional layer may be configured to detect objects within the digital image.

A convolutional layer is configured to perform a convolution operation to create a feature map summarizing a presence of one or more detected features in the input such as the digital image. A feature map is configured to indicate locations and strength of a detected feature. A convolution operation comprises applying a feature detector to the receptive fields of the digital image to check if a feature is present. The feature detector may comprise a two-dimensional (2D) array of weights representing a part of the digital image.

Nodes in a convolutional layer may have substantially the same weights and threshold values, thereby enabling detecting a same feature such as an edge in different regions of the image. Further, different hidden layers may be configured to detect different features in an image.

As another example, the neural network may comprise a recursive convolutional neural network (RCNN). A RCNN comprises a CNN wherein the CNN is configured to integrate recursive connections into the convolutional layers. An RCNN is configured such that a convolutional layer knows the input received by the input layer and the output of preceding convolutional layers. The process may be carried out repeatedly. A RCNN may be used for improving quality of results by taking into account outputs of preceding convolutional layers.

The neural network may be configured to apply a residual network (RESNET) learning model. A RESNET is configured to skip convolutional layers in the beginning of the learning process and reuse activations of a preceding layer, thereby speeding up an initial training of the neural network and enabling to avoid or at least alleviate degradation of deep networks.

Neural networks are configured to learn based on training data and they improve their accuracy over time. A learning algorithm of the neural network may comprise supervised learning or unsupervised learning. Supervised learning uses labeled input and output data, which means that the desired output is known, while an unsupervised learning algorithm does not use labeled input and output data.

According to an example embodiment, the apparatus 200 is configured to analyze image information using a computer vision algorithm. In the example of Figure 2, the computer vision algorithm comprises an algorithm for automatic acquisition and analysis of images in order to determine a condition of at least one screening medium. The computer vision algorithm may be stored, for example, in the memory 160.

Analyzing image information may comprise, for example, detecting predefined features in the image information. Analyzing image information may comprise identifying boundaries between objects and segmenting the image information based on the identified boundaries.

The apparatus 200 may be configured to analyze the image information using, for example, a convolutional neural network or a recursive convolutional neural network for image recognition and a trained data set for detecting a representation of predefined features such as one or more edges or corners of a screening medium. For example, the apparatus 200 may be configured to detect features in the image information by comparing a set of pixels in image data to neighboring sets of pixels or reference sets of pixels. A set of pixels may comprise one or more pixels.

According to an example embodiment, the apparatus 200 is configured to detect a representation of a plurality of corners of the screening medium within the image information.

A corner of a screening medium comprises an intersection of two edges of the screening medium such as two edges of a screen panel. The apparatus 200 may be configured to detect a representation of a first edge of a screening medium and a second edge of the screening medium, and determine, based on the first edge and the second edge, a representation of a corner within the image information.

The apparatus 200 may be configured to use, for example, computer vision to detect a representation of the plurality of corners of the screening medium.

The apparatus 200 may be configured to detect the representation of the plurality of corners in response to receiving the image information or in response to receiving a user input.

The apparatus 200 may be configured to present detected corners for a user such as an operator of the vibrating screen. For example, the apparatus 200 may be configured to visually highlight the detected corners in image information.

The apparatus 200 may further be configured to receive a user input for modifying a detected corner and modify the corner based on the user input. For example, assuming the operator thinks that a position of a detected corner is not correct, the operator may provide an input indicative of a correct position of the corner.

As explained above, a screening medium comprises a plurality of apertures for passing material of a defined size through the screening medium. Therefore, the apparatus 200 may be configured to determine, based on the plurality of detected corners of the screening medium, an area comprising the plurality of apertures. For example, the apparatus 200 may be configured to detect a first corner and a second corner that are opposite to each other and determine an area defined by the corners, when the screening medium is rectangular. As another example, the apparatus 200 may be configured to detect three or four corners and determine an area defined by the corners. As a further example, the apparatus 200 may be configured to detect two adjacent corners and use information on a screening media profile to determine an area defined by the corners.

According to an example embodiment, the apparatus 200 is configured to detect a representation of a plurality of apertures associated with the screening medium based on the representation of the plurality of corners.

The apparatus 200 may be configured to use, for example, computer vision to detect a representation of the plurality of apertures associated with the screening medium. The apparatus 200 may be configured to detect the representation of the plurality of apertures using, for example, neural network image recognition and a trained data set for detecting a representation of predefined features such as apertures on a screening medium.

Detecting a representation of a plurality of apertures may comprise processing the image information or a portion of the image information for identifying an outline of an aperture. For example, detecting the representation of a plurality of apertures may comprise segmenting the area defined by the plurality of corners and/or filtering image data associated with the area defined by the plurality of corners.

According to an example embodiment, detecting a representation of an aperture comprises measuring, based on the image information, a size of the aperture. A size of the aperture may comprise a width and/or length of the aperture. The size of an aperture may comprise the size in pixels, in centimetres, or the like. Measuring the size of an aperture based on image information may comprise, for example, fitting a minimum area rectangle to the detected aperture outline and/or inscribing a circle diameter in the detected aperture outline.

Minimum area rectangle fitting comprises defining a bounding rectangle and rotating the rectangle such that the rectangle follows an outline of an aperture while minimizing the size of the rectangle. The size of the aperture corresponds to the size of the rectangle.

Inscribing a circle diameter in a detected aperture outline comprises fitting a circle in the aperture and determining the size of the aperture based on a diameter of the circle.

According to an example embodiment, the apparatus 200 is configured to determine, based on the information on the screening medium profile and the representation of the plurality of apertures, a condition of the screening medium.

As explained above, a condition of a screening medium may comprise a physical state of the screening medium affecting operational efficiency of screening equipment or an estimate of remaining service life.

According to an example embodiment, wherein determining the condition of the screening medium comprises comparing the information on the screening medium profile and the representation of the plurality of apertures and calculating an amount of wear on the screening medium.

The apparatus 200 may be configured to determine a state of the screening medium based on the condition. A state may comprise, for example, an operating state of the screening medium or a failure state of the screening medium. A failure state of a screening medium may be caused by one or more failures within vibrating screen.

The apparatus 200 may be configured to inform an operator of the screen about the condition of the screening medium. For example, the apparatus 200 may be configured to provide a visualization indicative of the condition of the screening medium.

According to an example embodiment, wherein the condition comprises a wear heat map indicating an amount of wear on different parts of the wear heat map.

A wear heat map may comprise a graphical representation of wear and it may be based on a system of color-coding to represent different amounts of wear on the screening medium. The color-coding may be used for indicating where the wear is high and where low.

According to an example embodiment, the apparatus 200 is configured to detect, based on the condition, a failure within a portion of the screening medium.

A failure within a portion of the screening medium may comprise one or more different types of failures that decrease operational efficiency of the screening medium. For example, a failure may comprise a condition of the screening medium that enables oversized particles to pass through one or more apertures or a condition of the screening medium that prevents particles to pass through one or more apertures.

According to an example embodiment, detecting a failure within the portion of the screening medium comprises detecting a failure type of the failure.

A failure type may comprise, for example, a failure caused by a change in a configuration of apertures, a failure caused by at least partially clogged aperture of the screening medium, or a failure caused by a missing screening medium.

According to an example embodiment, the at least one failure type comprises at least one of the following: aperture failure, a grid failure or a panel failure.

An aperture failure may comprise a change in the characteristics of an aperture such as an occluded aperture, aperture ligament tear, aperture pegging, a change in aperture profile, or the like.

A grid failure may comprise a change in the characteristics of an internal grid of the screening medium such as deformed grid or exposed grid, or the like.

A panel failure may comprise a change in the characteristics of the panel such as a missing panel fixing, damaged panel fixing, a hole inside a panel, a missing panel, or the like.

The apparatus 200 may be configured to provide an indicator of a detected failure or failure type.

According to an example embodiment, the apparatus 200 is configured to provide at least one failure type indicator based on the detected at least one failure type.

The apparatus 200 may be configured to determine the effect of the failure type on the screening process. For example, the apparatus 200 may be configured to determine an effect of an occluded aperture, aperture tear, a missing screening medium or material pegging on the screening process.

According to an example embodiment, the apparatus 200 is configured to determine, based on the condition, an effect of wear on the processing efficiency of the screening medium.

According to an example embodiment, the apparatus 200 is configured to determine a maintenance action for the screening medium based on the condition.

A maintenance action may comprise an action relating to the screening medium for avoiding low performance of the screening medium. A maintenance action may comprise, for example, replacement of the screening medium or control movement of the screening medium to remove pegging.

Determining a maintenance action may comprise determining that a maintenance action is needed or predicting an upcoming maintenance action.

According to an example embodiment, the apparatus 200 is configured to determine based on the condition that the screening medium is to be replaced. For example, the apparatus 200 may be configured to determine, based on the condition, that a screening medium is missing, and a new screening medium needs to be added immediately.

According to an example embodiment, the apparatus 200 is configured to estimate, based on the condition, available operating time of the screening medium before replacement of the screening medium. For example, the apparatus 200 may be configured to determine that based on the amount of wear on the screening medium, the screening medium needs to be replaced after 100 hours of screening.

The apparatus 200 may further provide an indication for an operator of a suggested maintenance action.

According to an example embodiment, the apparatus 200 is configured to provide a recommendation to replace the screening medium.

The apparatus 200 may be configured to provide, based on the condition, one or more control signals for initiating a maintenance action for a screening medium or a control sequence for controlling the screening process.

According to an example embodiment, the apparatus 200 is configured to provide a control signal for initiating replacement of the screening medium based on the condition.

The apparatus 200 may be further configured to provide a report of the condition of the screening medium. The report may comprise, for example, information on aperture sizes, wear and open area, the wear heat map, a histogram of aperture sizes and/or the like.

According to an example embodiment, the apparatus 200 comprises means for performing features of the apparatus 200, wherein the means for performing comprises at least one processor 110, at least one memory 160 including computer code 120 configured to, with the at least one processor 110, cause the performance of the apparatus 200.

According to an example embodiment, the apparatus 200 comprises means for receiving information on a screening medium profile, means for receiving image information comprising a representation of the screening medium, means for detecting a representation of a plurality of corners of the screening medium within the image information, means for detecting a representation of a plurality of apertures associated with the screening medium based on the representation of the plurality of corners, and means for determining, based on the information on the screening medium profile and the representation of the plurality of apertures, a condition of the screening medium.

The apparatus 200 may further comprise means for detecting, based on the condition, a failure within a portion of the screening medium, means for providing at least one failure type indicator based on the detected at least one failure type, means for determining, based on the condition, that the screening medium is to be replaced and/or means for estimating, based on the condition, available operating time of the screening medium before replacement of the screening medium.

The apparatus 200 may further comprise means for providing a recommendation to replace the screening medium, means for determining, based on the condition, an effect of wear on the processing efficiency of the screening medium and/or means for providing a control signal for initiating replacement of the screening medium based on the wear profile condition.

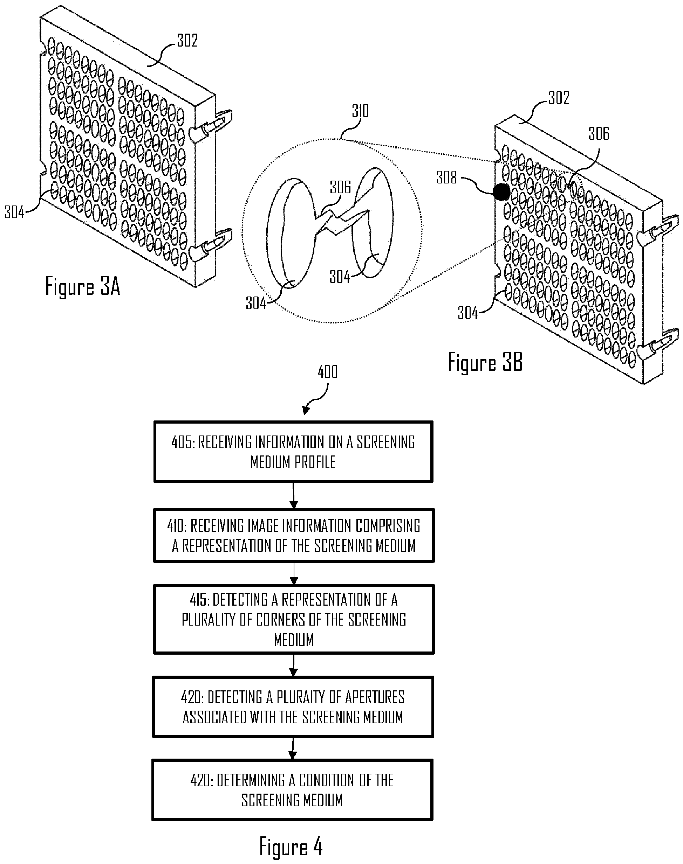

Figure 3A illustrates an example screening medium profile and Figure 3B illustrates an example representation of a screening medium.

The screening medium profile in the example of Figure 3A comprises a model indicative of characteristics of the screening medium 302 as manufactured. The characteristics of the screening medium 302 comprises locations of apertures 304 of the screening medium 302.

Figure 3B illustrates an example representation of a screening medium that may be mounted on a vibrating screen.

The representation of the screening medium 302 in the example of Figure 3B comprises locations of apertures 304 of the screening medium 302. In the example of Figure 3B, one of the ligaments 306 between apertures 304 is torn and one of the apertures is clogged by a rock 308. The torn ligament 306 is illustrated in the enlargement 310.

Figure 4 illustrates an example method 400 incorporating aspects of the previously disclosed embodiments. More specifically, the example method 400 illustrates determining a condition of a screening medium. The method may comprise a computer-implemented method performed by the apparatus 200.

The method starts with receiving 405 information on a screening medium profile. A screening medium profile may comprise, for example, characteristics of a screening medium. Characteristics of a screening medium may relate to a physical appearance of the screening medium.

The method continues with receiving 410 image information comprising a representation of the screening medium. In the example of Figure 4, the image information comprises a representation of a screening medium such as a screen panel installed in a vibrating screen.

The method continues with detecting 415 a representation of a plurality of corners of the screening medium within the image information. In the example of Figure 4, detecting a representation of the plurality of corners comprises analyzing the image information using a computer vision algorithm.

The method further continues with detecting 420 a representation of a plurality of apertures associated with the screening medium based on the representation of the plurality of corners.

In the example of Figure 4, detecting a representation of a plurality of apertures comprises processing the image information or a portion of the image information such as segmenting the area defined by the plurality of corners and/or filtering image data associated with the area defined by the plurality of corners.

The method further continues with determining 425, based on the information on the screening medium profile and the representation of the plurality of apertures, a condition of the screening medium.

In the example of Figure 4, a condition of a screening medium comprises a physical state of the screening medium affecting operational efficiency of screening equipment or an estimate of remaining service life.

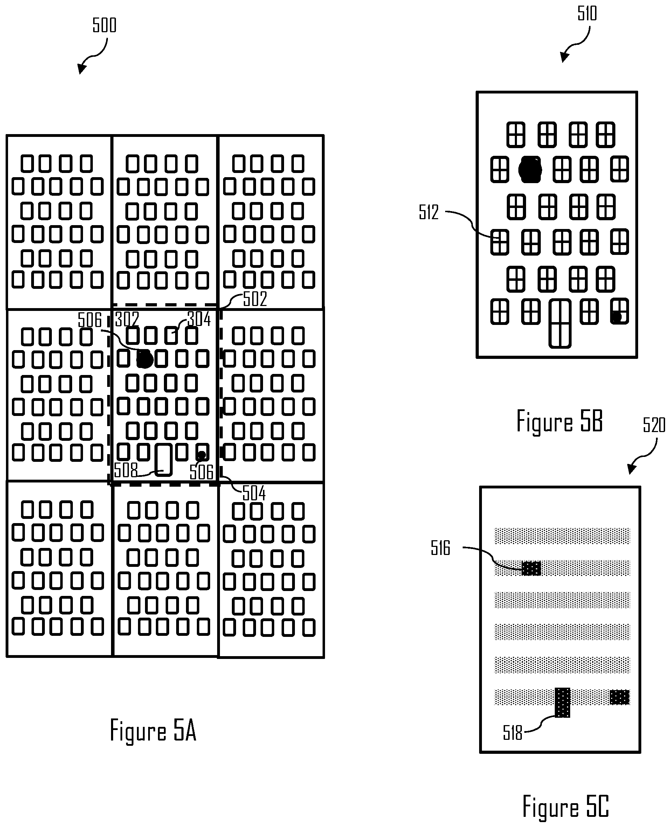

Figures 5A, 5B and 5C illustrate an example of monitoring a condition of a screening medium incorporating aspects of disclosed embodiments. The condition of the screening medium may be monitored, for example, by the apparatus 200 performing a computer-implemented method such as a method of the example of Figure 4.

In the examples of Figures 5A, 5B and 5C it is assumed that the apparatus 200 has received information on a screening medium profile comprising information on characteristics of the screening medium.

In the example of Figure 5A, image information 500 such as an image of screening media 302 comprising a plurality of screen panels is illustrated. A screening medium 302 comprises a plurality of apertures 304 for classifying material by size.

The image information 500 comprises a representation of at least one screening medium 302 comprising a plurality of apertures 304. Two apertures of the screening medium 302 are clogged by rocks 506 and one aperture is worn 508 such that it is larger than the other apertures.

The apparatus 200 is configured to detect a representation of a plurality of corners 502 of the screening medium within the image information 500 and a representation of a plurality of apertures 304 associated with the screening medium. The detected representation of the plurality of corners 502 is illustrated by the dashed line 504.

As explained above, detecting a representation of an aperture may comprise measuring, based on the image information, a size of the aperture. A size of the aperture may comprise a width and/or length of the aperture.

In the example of Figure 5B, the apparatus 200 detects a representation of apertures of the screening medium 302 by measuring the sizes 512 of the apertures. Measuring the size of an aperture based on image information may comprise, for example, fitting a minimum area rectangle to the detected aperture outline and/or inscribing a circle diameter in the detected aperture outline.

In the example of Figure 5C, the apparatus 200 determines a condition of the screening medium 302 based on information on the screening medium profile and the representation of the plurality of apertures 304. In the example of Figure 5C, the apparatus 200 illustrates the condition of the screening medium as a wear map 520. The wear map 520 indicates the positions of the clogged apertures 516 and the worn aperture 518.

Without limiting the scope of the claims, an advantage of determining a condition of the screening medium based on information on the screening medium profile and a representation of the plurality of apertures is that screening media may be inspected remotely, thereby enabling safer inspection. Another advantage may be shorter interruption time as the inspection is faster when personnel is not needed for inspection. A further advantage is better accuracy and consistency of inspection as the inspection is not subject to human bias.

Without in any way limiting the scope, interpretation, or application of the claims appearing below, a technical effect of one or more of the example embodiments disclosed herein is that operational efficiency may be improved.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. An apparatus for monitoring a condition of at least one screening medium comprising a plurality of apertures, the apparatus comprising at least one processor and at least one memory including computer program code, the at least one memory and the computer program code configured to with the at least one processor, cause the apparatus at least to:
receive information on a screening medium profile;
receive image information comprising a representation of the screening medium;
detect a representation of a plurality of corners of the screening medium within the image information;
detect a representation of a plurality of apertures associated with the screening medium based on the representation of the plurality of corners; and
determine, based on the information on the screening medium profile and the representation of the plurality of apertures, a condition of the screening medium.

2. The apparatus according to claim 1, wherein the at least one memory and the computer program code are further configured to, with the at least one processor, cause the apparatus to detect, based on the condition, a failure within a portion of the screening medium.

3. The apparatus according to claim 2, wherein detecting a failure within the portion of the screening medium comprises detecting a failure type of the failure.

4. The apparatus according to claim 3, wherein the at least one failure type comprises at least one of the following: an aperture failure, a grid failure or a panel failure.

5. The apparatus according to claims 3 or 4, wherein the at least one memory and the computer program code are further configured, to with the at least one processor, cause the apparatus to provide at least one failure type indicator based on the detected at least one failure type.

6. The apparatus according to any preceding claim, wherein the at least one memory and the computer program code are further configured to, with the at least one processor, cause the apparatus to determine, based on the condition, that the screening medium is to be replaced.

7. The apparatus according to any preceding claim, wherein the at least one memory and the computer program code are further configured to, with the at least one processor, cause the apparatus to estimate, based on the condition, available operating time of the screening medium before replacement of the screening medium.

8. The apparatus according to any preceding claim, wherein the at least one memory and the computer program code are further configured to with the at least one processor, cause the apparatus to provide a recommendation to replace the screening medium.

9. The apparatus according to any preceding claim, wherein determining the condition of the screening medium comprises comparing the information on the screening medium profile and the representation of the plurality of apertures and calculating an amount of wear on the screening medium.

10. The apparatus according to any preceding claim, wherein the condition comprises a wear heat map indicating an amount of wear on different parts of the wear heat map.

11. The apparatus according to any preceding claim, wherein the at least one memory and the computer program code are further configured to with the at least one processor, cause the apparatus to determine, based on the condition, an effect of wear on the processing efficiency of the screening medium.

12. The apparatus according to any preceding claim, wherein the at least one memory and the computer program code are further configured to with the at least one processor, cause the apparatus to provide a control signal for initiating replacement of the screening medium based on the condition.

13. A mobile scanning device comprising an apparatus according to any preceding claim.

14. A method for monitoring wear of at least one screening medium comprising a plurality of apertures, the method comprising:
receiving information on a screening medium profile;
receiving image information comprising a representation of the screening medium;
detecting a representation of a plurality of corners of the screening medium within the image information;
detecting a representation of a plurality of apertures associated with the screening medium based on the representation of the plurality of corners; and
determining, based on the information on the screening medium profile and the representation of the plurality of apertures, a condition of the screening medium.

15. A computer program comprising instructions for causing an apparatus to perform at least the following:
receiving information on a screening medium profile;
receiving image information comprising a representation of the screening medium;
detecting a representation of a plurality of corners of the screening medium within the image information;
detecting a representation of a plurality of apertures associated with the screening medium based on the representation of the plurality of corners; and
determining, based on the information on the screening medium profile and the representation of the plurality of apertures, a condition of the screening medium.
